(19) **Europäisches Patentamt**

**European Patent Office**

**Office européen des brevets**

(11) **EP 1 679 815 A2**

(12) **EUROPEAN PATENT APPLICATION**

(43) Date of publication:
**12.07.2006 Bulletin 2006/28**

(51) Int Cl.:
**H04L 1/06** (2006.01)

(21) Application number: **05019437.2**

(22) Date of filing: **07.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.01.2005 KR 2005001242**

(71) Applicant: **Samsung Electronics Co., Ltd.**
**Yeongtong-gu**
**Suwon-si, Gyeonggi-do (KR)**

(72) Inventors:
• **Park, Seung-Young**
**Yeongtong-gu,**
**Suwon-si,**
**Gyeonggi-do (KR)**

• **Yun, Sang-Boh**
**Yeongtong-gu,**
**Suwon-si,**
**Gyeonggi-do (KR)**
• **Lee, Yeon-Woo**
**Yeongtong-gu,**
**Suwon-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for receiving differential space-time block code**

(57) Provided is an apparatus and method for receiving a differential space-time block code (STBC) without estimating a channel characteristic using an additional training sequence in a wireless communication system using a plurality of transmission/reception antennas. The apparatus for receiving a differential STBC includes a detector for detecting a symbol from a received differential STBC using a trellis diagram and a Viterbi algorithm, a deinterleaver for deinterleaving the detected symbol, and a decoder for decoding a signal deinterleaved by the deinterleaver.

FIG.2

**Description**

The present invention generally relates to an apparatus and method for receiving a differential space-time block code (STBC), and in particular, to an apparatus and method for receiving a differential STBC without estimating a channel characteristic using an additional training sequence in a wireless communication system that uses a plurality of transmission/reception antennas.

Recently, there has been growing demand for various services that require higher transmission rates, such as moving pictures or Internet services, in addition to audio services in wireless communication. To provide ever-increasing varieties of high-speed transmission services to as many users as possible and at a low cost, it is important to develop physical layer elements capable of transmitting more data with limited communication resources. Among currently considered techniques for improving transmission efficiency, a multi-antenna technology using a plurality of antennas at both a transmission end and a reception end can significantly improve communication capacity and transmission/reception performance without additional frequency allocation or power increase and is thus attracting a lot of interest.

Among the multi-antenna technology techniques are spatial diversity that improves transmission reliability using symbols that pass through various channel paths and spatial multiplexing that improves a transmission rate by simultaneously transmitting a plurality of data symbols through a plurality of transmission antennas. Recently, much research has been conducted on combining spatial diversity and spatial multiplexing schemes to exploit their advantages.

Spatial diversity involves complementing deep fading of channel by combining signals that undergo different Rayleigh fading through different transmission/reception antennas, thereby improving reception performance. Thus, the performance of spatial diversity is determined by the number of independent channels and is referred to as diversity gain. A diversity technique is divided into transmit diversity and receive diversity according to whether the diversity gain is obtained at a transmission end or at a reception end. When the number of transmission antennas is N and the number of reception antennas is M, a maximum of M x N independent fading channel combinations can be obtained. Thus, the maximum diversity is M x N.

Transmit diversity involves designing transmission signals transmitted through transmission antennas to have temporal and spatial correlations with one another to obtain diversity gains. Transmit diversity can be classified into a closed-loop scheme in which a feedback channel exists from a reception end to a transmission end with information on the feedback channel being used and an open-loop scheme that does not use feedback.

For the open-loop scheme, a space-time trellis code (STTC) design combined with trellis coding has been suggested by V. Tarokh, N. Seshadri, and A.R. Calderbank. However, in the case of a trellis code, decoding complexity exponentially increases in proportion to a modulation order as the number of transmission antennas increases. Another open-loop scheme is a space-time block code (STBC) scheme using an orthogonal matrix at a transmitter. S. Alamouti has suggested a simple scheme called space-time transmit diversity for a case where two transmission antennas are used in the STBC scheme. Space-time transmit diversity, also referred to as Alamouti diversity, provides very simple encoding and decoding, and, in particular, decoding which can linearly induce maximum likelihood detection.

However, since a change in a channel that a terminal or a base station experiences is accelerated when the terminal moves fast, channel response continues to change over time within a single transmission frame. In such an environment, many pilot signals should be used to estimate channel response that changes over time. In particular, in a system using a plurality of transmission antennas, the number of pilot signals required for channel response estimation increases in proportion to the number of transmission antennas. As a result, the use of a large number of pilot signals degrades the efficiency of the system. To solve this problem, a differential phase shift keying (DPSK) scheme has been suggested. This scheme reconstructs a transmission signal, without using information on the channel at a reception end, to remove a load caused by channel estimation. Similarly, in a system using a plurality of antennas, a transmission signal can be reconstructed without channel estimation at a reception end through unitary space-time modulation or a differential STBC scheme.

In the differential STBC scheme, differential modutation/demodulation used in a system employing a single antenna is extended to a system using a plurality of antennas and applied to the STBC scheme. In the differential STBC scheme, a signal can be transmitted using M-order phase shift keying (PSK) modulation when two transmission antennas are used. Since the differential STBC scheme is designed based on an orthogonal STBC scheme, decoding is very simple. However, since the conventional differential STBC scheme can adopt only PSK modulation, any transmission rate increase is limited.

To overcome the disadvantage that conventional differential STBC schemes can use only PSK-type modulation, improved differential STBC schemes capable of transmitting a quadrature amplitude modulated (QAM) signal have been suggested. When a differential signal is encoded, the improved differential STBC schemes normalize a current symbol using the power of a previously transmitted symbol, thereby allowing decoding at a reception end even when a symbol amplitude changes. However, unlike general differential STBC schemes, in the improved differential STBC schemes, the reception end should be informed of a squared sum of channel coefficients, i.e., a value corresponding to the power of the channel coefficients. Although the improved differential STBC schemes are different from conventional non-coherent decoding schemes in principle, they may also be regarded as being similar to the conventional non-coherent decoding schemes in that decoding is performed without using a preamble or a pilot signal for channel estimation, since the power of a channel can be estimated without the use of a pilot signal.

However, differential detection for the STBC scheme has a signal-to-noise ratio (SNR) loss of 3dB at all times when compared to coherent detection for the STBC.

The present invention aims at improving the performance of receiving a differential STBC.

It is the object of the present invention to receive a differential STBC without channel estimation.

This object is solved by the subject matter of the independent claims.

Preferred embodiments are defined in the dependent claims.

It is an aspect of the present invention to receive a differential STBC using a trellis diagram and a Viterbi algorithm. To achieve the above, an apparatus is provided for receiving a differential space-time block code (STBC). The apparatus includes a detector, a deinterleaver, and a decoder. The detector detects a symbol from a received differential STBC using a trellis diagram and a Viterbi algorithm. The deinterleaver deinterleaves the detected symbol. The decoder decodes a signal deinterleaved by the deinterleaver.

The detector expresses the differential STBC using the trellis diagram and detects the symbol by implementing the Viterbi algorithm, and at least one of a forward Viterbi algorithm and a backward Viterbi algorithm is implemented as the Viterbi algorithm. The apparatus further includes an interleaver for determining the signal decoded by the decoder using a priori probability, interleaving the signal, and feeding the interleaved signal back to the detector. The detector repeats the Viterbi algorithm using the interleaved signal.

To achieve the above, a method is also provided for receiving a differential space-time block code (STBC) in an apparatus for receiving the differential STBC. The method includes the steps of expressing a received differential STBC using a trellis diagram and detecting a symbol by implementing a Viterbi algorithm, deinterleaving the detected symbol, and decoding a deinterleaved signal.

At least one of a forward Viterbi algorithm and a backward Viterbi algorithm is implemented as the Viterbi algorithm. The method further includes interleaving the decoded signal and feeding the interleaved signal back to a detector. The method further includes repeating the Viterbi algorithm using the interleaved signal.

The above object and other aspects, features and advantages of the present invention will become more apparent from the following detailed description when taken in conjunction with the accompanying drawings in which:

FIG. 1 is a block diagram of a general apparatus for transmitting a differential STBC; and

FIG. 2 is a block diagram of an apparatus for receiving a differential STBC according to the present invention.

A preferred embodiment of the present invention will now be described in detail with reference to the annexed drawings. In the following description, a detailed description of known functions and configurations incorporated herein has been omitted for conciseness.

The present invention concerns different reception techniques for transmission/reception of a differential STBC.

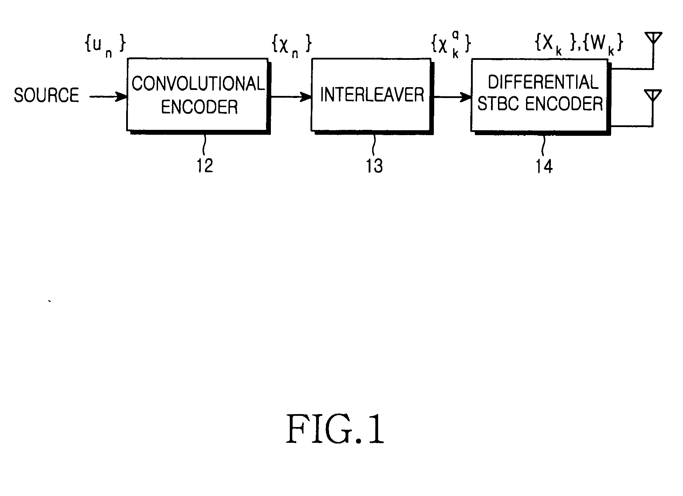

FIG 1 is a block diagram of a general apparatus for transmitting a differential STBC. Referring to FIG. 1, the apparatus for transmitting a differential STBC includes a convolutional encoder 12, an interleaver 13, and a differential STBC encoder 14. The apparatus performs convolutional encoding and then interleaving on data $u_n$ generated from a source, and performs differential STBC encoding on a result of the interleaving for transmission.

Since a convolutional code has a coding gain that is larger than a block code and is easy to decode, it has been widely used. The apparatus for transmitting a differential STBC changes a burst error of bits that may be generated in a channel into an isolated error, and the interleaver 13 performs interleaving to improve the efficiency of error correction coding.

The differential STBC encoder 14 performs differential STBC encoding on an interleaved signal, combines a transmission signal $X_k$ with a previously transmitted signal $W_{k-1}$, and transmits a result of the combination as $W_k$. In other words, $W_k = W_{k-1}X_k$. The transmission signal $X_k$ is expressed as Equation (1):

$$X_k = \frac{1}{\sqrt{n_s}} \sum_{n=1}^{n_t} \left( \overline{s}_n^{(k)} A_n + j\widetilde{s}_n^{(k)} B_n \right) \dots\dots\dots\dots\dots\dots\dots\dots\dots\dots\dots\dots\dots(1)$$

Here, $\overline{s}_n^{(k)}$ is a real part of a QAM symbol and $\widetilde{s}_n^{(k)}$ is an imaginary part of a QAM symbol, and $A_n$ and $B_n$ are a transmission matrix corresponding to respective symbols.

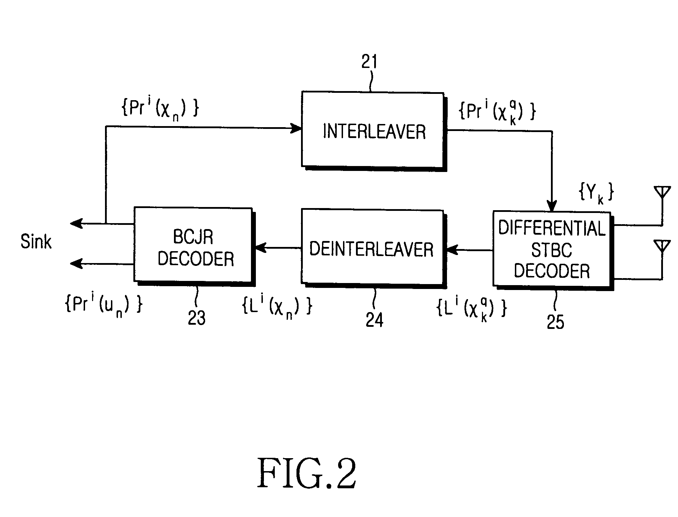

FIG. 2 is a block diagram of an apparatus for receiving a differential STBC encoded as described above, according to the present invention. Referring to FIG. 2, the apparatus for receiving a differential STBC according to the present invention includes a differential STBC detector 25, a deinterleaver 24, a Bahl, Cocke, Jelinek and Raviv (BCJR) decoder 23, and an interleaver 21. Thus, the data $u_n$ generated from a source, as described with reference to FIG. 1, finally arrives at a sink.

The differential STBC detector 25 detects a symbol in a received signal $Y_k$ using a trellis diagram and a Viterbi algorithm. As the Viterbi algorithm, a forward Viterbi algorithm, a backward Viterbi algorithm, or both, may be used.

The symbol detected by the differential STBC detector 25 passes through the deinterleaver 24 for error correction and is decoded by the BCJR decoder 23. Although a long burst error is generated when an interleaved signal passes through a transmission channel, it is divided for each block after passing through the deinterleaver 24. Thus, more errors can be corrected as compared to a case where interleaving is not performed.

A decoded signal is interleaved by the interleaver 21 and is fed back to the differential STBC detector 25. The interleaver 21 rearranges an input order of information bits to convert information having a correlation into information having no correlation, thereby removing an error pattern. Thus, a transmission error is reduced, as the decoded signal is fed back through the interleaver 21.

Detection of a symbol through the differential STBC detector 25 using the trellis diagram and the Viterbi algorithm is now described in more detail. The signal $Y_k$ received by the differential STBC detector 25 is expressed as Equation (2) by multiplying the transmission signal $W_k$ by a channel gain H of a transmission channel and adding noise $E_k$,

$$Y_k = HW_k + E_k \dots\dots\dots\dots\dots\dots\dots\dots\dots\dots\dots\dots\dots\dots\dots\dots(2)$$

where since $W_k=W_{k-1}X_k$, Equation (2) can be expressed as Equation (3):

$$Y_k = HW_{k-1}X_k + E_k \dots\dots\dots\dots\dots\dots\dots\dots\dots\dots\dots\dots\dots\dots(3)$$

Assuming that the signal $Y_k$ received by the differential STBC detector 25 is expressed as Equations (2) and (3), if an observation interval is 3, detection of signals $X_k$ and $X_{k-1}$ using received signals $Y_k$, $Y_{k-1}$, and $Y_{k-2}$ is performed using Equation (4):

$$\min_{\{X_k, X_{k-1}\}} \left\| Y_k - HW_k \right\|^2 + \left\| Y_{k-1} - HW_{k-1} \right\|^2 + \left\| Y_{k-2} - HW_{k-2} \right\|^2 \dots\dots\dots\dots\dots\dots\dots(4)$$

where since $W_k=W_{k-1}X_k$ and $X_kX_k^H = I$ (H of $X_k^H$ indicates a Hermitianoperation and I indicates an identity matrix), Equation (4) can be expressed as Equation (5):

$$\min_{\{X_k, X_{k-1}\}} \left\| Y_k - HW_{k-1}X_k \right\|^2 + \left\| Y_{k-1} - HW_{k-1} \right\|^2 + \left\| Y_{k-2} - HW_{k-1}X_{K-1}^H \right\|^2 \dots\dots\dots\dots\dots(5)$$

Equation (5) can be differentiated with respect to $HW_{k-1}$ as Equation (6):

$$\min_{\{X_k, X_{k-1}\}} \operatorname{Re}\left\{ Tr(X_k Y_k^H Y_{k-1} + X_k Y_k^H Y_{k-2} X_{k-1} + X_{k-1} Y_{k-1}^H Y_{k-2}) \right\} \dots\dots\dots\dots\dots\dots(6)$$

Equation (6) can be expressed using a trellis diagram as Equation (7):

$$\lambda(X_{k-1} \rightarrow X_k) = \text{Re}\{Tr(X_k Y_k^H Y_{k-1} + X_k Y_k^H Y_{k-2} X_{k-1})\}$$

$$= \sum_n \text{Re}[Tr\{A_n Y_k^H Y_{k-1}\}]\overline{s}_n^{(k)}$$

$$- \sum_n \text{Im}[Tr\{B_n Y_k^H Y_{k-1}\}]\widetilde{s}_n^{(k)}$$

$$+ \sum_n \sum_{n'} \text{Re}[Tr\{A_n Y_k^H Y_{k-2} A_{n'}\}]\overline{s}_n^{(k)}\overline{s}_{n'}^{(k-1)} \quad\dots\dots\dots\dots(7)$$

$$- \sum_n \sum_{n'} \text{Im}[Tr\{jB_n Y_k^H Y_{k-2} B_{n'}\}]\widetilde{s}_n^{(k)}\widetilde{s}_{n'}^{(k-1)}$$

$$+ \sum_n \sum_{n'} \text{Re}[Tr\{jA_n Y_k^H Y_{k-2} B_{n'}\}]\overline{s}_n^{(k)}\widetilde{s}_{n'}^{(k-1)}$$

$$- \sum_n \sum_{n'} \text{Im}[Tr\{B_n Y_k^H Y_{k-2} A_{n'}\}]\widetilde{s}_n^{(k)}\overline{s}_{n'}^{(k-1)}$$

Equation (7) is a branch metric.

A Viterbi algorithm is implemented in the differential STBC detector 25 as follows.

First, a forward Viterbi algorithm is implemented as Equation (8):

$$\mu_f(X_k) = \max_{\{X_{k-1}\}} \{\mu_f(X_{k-1}) + \lambda(X_{k-1} \rightarrow X_k)\}\dots\dots\dots\dots(8)$$

where $\mu_f(X_{k-1})$ indicates a path metric.

If a signal decoded in the BCJR decoder 23 is fed back through interleaver 21, $\log\text{Pr}(X_{k-1})$ is added to Equation (8) and the forward Viterbi algorithm is implemented as Equation (9):

$$\mu_f(X_k) = \max_{\{X_{k-1}\}} \{\mu_f(X_{k-1}) + \lambda(X_{k-1} \rightarrow X_k) + \log\text{Pr}(X_{k-1})\}\dots\dots\dots(9)$$

where $\log\text{Pr}(X_{k-1})$ indicates a priori probability output from the BCJR decoder 23 during a previous feedback session.

Like the forward Viterbi algorithm, a backward Viterbi algorithm is implemented as Equation (10):

$$\mu_b(X_k) = \max_{\{X_{k+1}\}} \{\mu_b(X_{k-1}) + \lambda(X_{k-1} \rightarrow X_k)\}\dots\dots\dots\dots(10)$$

As in the forward Viterbi algorithm, if a signal decoded in the BCJR decoder 23 is fed back through interleaver 21, the backward Viterbi algorithm is implemented as Equation (11):

$$\mu_b(X_k) = \max_{\{X_{k+1}\}} \{\mu_b(X_{k+1}) + \lambda(X_{k+1} \rightarrow X_k) + \log\text{Pr}(X_{k+1})\}\dots\dots\dots(11)$$

The differential STBC detector 25 outputs a bit value after implementing the trellis diagram and the Viterbi algorithm as described above.

The calculation of the bit value is performed as Equation (12):

$$L(X_k^q) = \sum_{X_k \in X_{+1}^q} \{\mu_f(X_k) + \mu_b(X_k)\} - \sum_{X_k \in X_{-1}^q} \{\mu_f(X_k) + \mu_b(X_k)\} \quad \dots\dots\dots\dots\dots\dots\dots\dots(12)$$

where $X_{\pm1}^q$ represents a group of transmission symbols having a $q^{th}$ bit of $\pm1$.

As described above, in the present invention, a differential STBC is received using the trellis diagram and the Viterbi algorithm without channel estimation. Therefore, by using the trellis diagram and the Viterbi algorithm, a differential STBC can be received and the performance of receiving the differential STBC can be improved, without channel estimation. In addition, the performance of receiving a differential STBC can be similar to that in conventional coherent detection, without channel estimation.

While the invention has been shown and described with reference to a certain preferred embodiment thereof, it will be understood by those skilled in the art that various changes in form and details may be made therein without departing from the scope of the invention.

## Claims

1. An apparatus for receiving a differential space-time block code, STBC, the apparatus comprising:

   a detector for detecting a symbol from a received differential STBC using a trellis diagram and a Viterbi algorithm;
   a deinterleaver for deinterleaving the detected symbol; and
   a decoder for decoding a signal deinterleaved by the deinterleaver.

2. The apparatus of claim 1, wherein the detector expresses the differential STBC using the trellis diagram and detects the symbol by implementing the Viterbi algorithm, and at least one of a forward Viterbi algorithm and a backward Viterbi algorithm is implemented as the Viterbi algorithm.

3. The apparatus of claim 1 or 2, further comprising an interleaver for determining the signal decoded by the decoder using a priori probability, interleaving the signal, and feeding the interleaved signal back to the detector.

4. The apparatus of claim 3, wherein the detector repeats the Viterbi algorithm using the interleaved signal.

5. A method for receiving a differential space-time block code, STBC, in an apparatus for receiving the differential STBC, the method comprising the steps of:

   expressing a received differential STBC using a trellis diagram and detecting a symbol by implementing a Viterbi algorithm;
   deinterleaving the detected symbol; and
   decoding a deinterleaved signal.

6. The method of claim 5, wherein at least one of a forward Viterbi algorithm and a backward Viterbi algorithm is implemented as the Viterbi algorithm.

7. The method of claim 5 or 6, further comprising the step of interleaving the decoded signal and feeding the interleaved signal back to a detector.

8. The method of claim 7, further comprising the step of repeating the Viterbi algorithm using the interleaved signal.

$\{u_n\}$ $\{x_n\}$ $\{x_k^q\}$ $\{X_k\},\{W_k\}$

SOURCE →

| CONVOLUTIONAL ENCODER |
| INTERLEAVER |
| DIFFERENTIAL STBC ENCODER |

12 13 14

FIG.1

$\{Pr^i(\chi_n)\}$ →

**INTERLEAVER** — 21

→ $\{Pr^i(\chi_k^q)\}$

$\{Y_k\}$

Sink ←

**BCJR DECODER** ← **DEINTERLEAVER** ← **DIFFERENTIAL STBC DECODER**

$\{Pr^i(u_n)\}$   23   $\{L^i(\chi_n)\}$   24   $\{L^i(\chi_k^q)\}$   25

## FIG.2